# EUROPEAN PATENT SPECIFICATION

(11) **EP 4 062 812 B1**
(45) Date of publication and mention of the grant of the patent: **18.09.2024**
(21) Application number: 21163851.5
(22) Date of filing: 22.03.2021
(51) Int. Cl.: A47J 43/07, A47J 43/06

(54) **APPLIANCE AND METHOD FOR TOOL DETECTION**
GERÄT UND VERFAHREN ZUR WERKZEUGERKENNUNG
APPAREIL ET PROCÉDÉ DE DÉTECTION D'OUTIL

(43) Date of publication of application: 28.09.2022
(73) Proprietor: BSH Hausgeräte GmbH, 81739 München (DE)
(72) Inventor: Blatnik, Gregor, 2381 Podgorje (SI); Brinovsek, Luka, 3341 Smartno ob Dreti (SI); Pacnik, Roman, 2383 Smartno pri Slovenj Gradcu (SI)

(56) References cited:
- WO-A1-2007/023127
- US-A1- 2019 008 326
- US-B2- 9 999 320

## Description

The present document relates to a household and/or kitchen appliance. In particular, the present document relates to the detection of the tool which is being used within an appliance.

A kitchen appliance may be used with various different tools for performing different processing of a food item which is placed within the receptacle, in particular within the bowl, of the appliance. Example tools are a knife, a shredder, a dough hook, etc. Operation of the appliance may be adapted depending on the tool which is attached to the appliance.

US 9 999 320 B2 describes a food mixer which comprises a mixing tool having a magnetic portion for tool detection. US 2019/008326 A1 describes a food processing machine with a food processing tool, wherein the food processing machine is configured to issue a sharpening alert. WO 2007/023127 A1 describes a kitchen appliance with a safety fixture for locking a tool coupling.

The present document addresses the technical problem of detecting the tool which is being used within an appliance in an efficient and reliable manner, in particular for increasing the safety and/or the comfort of use of the appliance. The technical problem is solved by each of the independent claims. Preferred examples are described in the dependent claims.

According to an aspect an appliance, notably a kitchen and/or household appliance, is described. The appliance comprises a motor configured to drive a tool which is attached to the motor. Example tools are a knife, a shredder, a hook, a foaming tool, etc. The motor may be integrated within a base unit of the appliance, wherein the base unit may be configured to be placed on a worktop of a kitchen.

The appliance further comprises a receptacle (notably a bowl) configured to take up content (e.g. a food item) that is to be processed within the receptacle using the tool which is attached to and/or driven by the motor. Hence, the tool may be located within the receptacle. The appliance may comprise a lid for closing the receptacle. The receptacle may be placed on top of the base unit of the appliance.

The appliance is configured such that the tool which is attached to and/or driven by the motor is selectable in an interchangeable manner from a set of K different tools, with K≥ 2 (typically K≥ 5 or K≥ 10). By way of example, a user may be enabled to position (sequentially) K different tools onto a coupling of the appliance. The coupling may be located within the receptacle. The coupling may be coupled to the motor, and the motor may be configured to drive a tool via the coupling.

Each tool from the set of K different tools comprises an identification component which is configured to generate a magnetic field that is indicative of a magnetic code from a set of K different magnetic codes for the respective K different tools. In other words, K different versions or configurations of the identification component may be provided, wherein each of the configuration of the identification component may be configured to generate a different one of K different magnetic fields which correspond to K different magnetic codes for indicating the respective K different tools. A first tool may comprise a first configuration of the identification component which generates a first magnetic field indicative of a first magnetic code, a second tool may comprise a second configuration of the identification component which generates a second magnetic field indicative of a second magnetic code, and so on for each one of the K different tools.

According to the invention, the identification component of a tool (notably of each tool) from the set of K different tools is configured to generate a magnetic field which comprises M different field components, with M≥2 (e.g. M=2 or M=3 or more). Each field component may exhibit one out of Q different polarity states, with Q≥ 1 (e.g. Q=2 or Q=3 or Q=4 or more), and N different field strengths, with N ≥ 1 (e.g. N=2 or N=3 or more), for providing (Q*N)^{M} different magnetic codes (if no disambiguation is performed regarding the present or the non-presence of the different field components). ((Q*N+1)^{M} - 1) different magnetic codes may be provided, when considering the presence or non-presence of each of the M different field components within the codes.

By making use of an identification component which is configured to generate an overall magnetic field with multiple (distinct) magnetic field components, the different magnetic fields for the different magnetic codes can be generated and measured in an efficient and reliable manner.

The appliance comprises a detection unit (with one or more magnetic sensors, e.g. Hall sensors) configured to provide measurement information regarding the magnetic field that is generated by the identification component of the tool which is attached to and/or driven by the motor. In particular, the detection unit may be configured to determine measurement information which, for each one of the M different magnetic field components of the overall magnetic field, indicates whether or not the magnetic field component is present within the magnetic field, and/or indicates the polarity state out of the Q different polarity states of the magnetic field component, and/or indicates the field strength out of the N different field strengths of the magnetic field component.

In addition, the appliance comprises a control unit which is configured to determine, based on the measurement information, whether or not a tool is attached to the motor and/or which tool from the set of K different tools is attached to the motor. In particular, the control unit may be configured to determine the magnetic code which is indicated by the identification component of the tool which is attached to the motor, based on the measurement information. Furthermore, the control unit may be configured to determine the tool from the set of K different tools using a pre-determined mapping between the set of K different magnetic codes and the set of K different tools. As a result of this, tool detection may be performed in a comfortable and reliable manner.

Furthermore, the control unit is configured to operate the appliance in dependence of the measurement information, in particular in dependence of whether or not a tool is attached to the motor and/or in dependence of which tool from the set of K different tools is attached to the motor. By way of example, the control unit may be configured to provide a user feedback via a user interface of the appliance or of a connected (smart) device (e.g., a smart phone, a smart watch, a tablet PC, a smart TV, etc.), wherein the user feedback is indicative of whether or not a tool is attached to the motor and/or which is indicative of which tool is attached to the motor. In a further example, the control unit may be configured to set one or more operational parameters of the motor in dependence of the tool which is attached to the motor. Example operational parameters are: the speed and/or the speed limitation of the motor; the ramp-up and/or ramp-down of the speed of the motor; the torque and/or the torque limitation of the motor; and/or the duration of the operation of the motor. As a result of this, the comfort of use and/or the safety of the appliance may be improved.

The control unit may be configured to track, for each tool from the set of K different tools, a cumulated usage time of the respective tool. The appliance may then be operated in dependence of the cumulated usage time of the tool which is attached to the motor. In particular, an operational parameter of the appliance may be adapted in dependence of the cumulated usage time of the tool which is attached to the motor. By doing this, the comfort and/or the safety of the appliance may be improved further.

The motor is configured to rotate the tool which is attached to the motor around a rotational axis, wherein the rotation axis is typically arranged along a vertical direction (i.e. perpendicular to the worktop that the appliance is placed on). The identification component may be attached to the tool such that the identification component is rotated around the rotational axis (along with the tool). The identification component of a tool (notably of each tool) from the set of K different tools may be configured to generate a magnetic field which is rotationally invariant with respect to a rotation around the rotational axis. As a result of this, tool detection may be performed in particularly reliable manner (even when the motor is not operated for rotating the tool).

The identification component of a tool (notably of each tool) from the set of K different tools comprises M magnetic elements, with M≥ 2, at M different locations within the identification component. A magnetic element, in particular each magnetic element, may be a magnetic ring which is arranged around the rotational axis of the tool (thereby providing rotational invariance in an efficient manner). Each of the M magnetic elements is configured to generate a magnetic field component of the overall magnetic field which is generated by the identification component. A magnetic element may comprise a permanent magnet. By making use of M magnetic elements for generating an overall magnetic field, the K different magnetic fields indicating K different magnetic codes for the K different tools may be provided in an efficient and reliable manner.

At least two of the M different magnetic elements are located at different radial distances from the rotational axis. Alternatively, or in addition, at least two of the M different magnetic elements are located side-by-side along the rotational axis. By placing different magnetic elements at different locations, the different magnetic field components of the overall magnetic field can be measured in an efficient and reliable manner using different magnetic sensors of the detection unit at the different locations of the different magnetic elements.

Each of the M magnetic elements may exhibit one polarity state out of a set of Q different polarity states, with Q≥ 2. The Q different polarity states may differ with regards to the North-South orientation of the magnetic field component which is generated by the respective magnetic element. Example polarity states comprise: a first polarity state having an upper north pole and a lower south pole with respect to the vertical rotational axis of the tool; and/or a second polarity state having an upper south pole and a lower north pole with respect to the vertical rotational axis; and/or a third polarity state having an inner south pole and an outer north pole along the radial direction with respect to the vertical rotational axis; and/or a fourth polarity state having an inner north pole and an outer south pole along the radial direction with respect to the vertical rotational axis. By making use of different polarity states of the one or more magnetic field components, different magnetic codes may be provided in an efficient and reliable manner.

Alternatively, or in addition, each of the M magnetic elements may be configured to generate a magnetic field component having one magnetic field strength out of a set of N different magnetic field strengths, with N≥ 2. By making use of different field strengths of the one or more magnetic field components, different magnetic codes may be provided in an efficient and reliable manner.

The detection unit may comprise (at least or exactly) M different magnetic sensors for the respective M magnetic elements, wherein each magnetic sensor may be configured to capture measurement information regarding the magnetic field component which is generated by the respective magnetic element. By providing dedicated magnetic sensors for the different magnetic field components, the magnetic code may be determined in a particularly reliable manner.

A magnetic sensor from the M different magnetic sensors may be aligned with the respective magnetic element from the M magnetic elements. This allows a reliable disambiguation between the first and second polarity states. Alternatively, a first magnetic sensor may be aligned with a first edge and a second magnetic sensor may be aligned with a second edge of a single magnetic element from the M magnetic elements. This allows a reliable disambiguation between the first up to fourth polarity states.

According to a further aspect, a method for detecting a tool of an appliance is described. The appliance is designed as described in the present document. The method comprises determining measurement information regarding the magnetic field that is generated by the identification component of the tool which is attached to the motor. Furthermore, the method comprises determining, based on the measurement information, whether or not a tool and/or which tool from the set of K different tools is attached to the motor; and/or operating the appliance in dependence of the measurement information, in particular in dependence of whether or not a tool and/or in dependence of which tool from the set of K different tools is attached to the motor.

It should be noted that the methods and systems including its preferred embodiments as outlined in the present document may be used stand-alone or in combination with the other methods and systems disclosed in this document. In addition, the features outlined in the context of a system are also applicable to a corresponding method.

The invention is explained below in an exemplary manner with reference to the accompanying drawings, wherein
Figure 1a shows a block diagram of a kitchen appliance, in particular of a cooking processor;
Figure 1b shows a perspective view of a kitchen appliance;
Figure 2a illustrates a tool with an identification component comprising one or more magnetic rings;
Figures 2b to 2e show different magnetic ring configurations of an identification component; and
Figure 3 shows a flow chart of a method for tool detection.

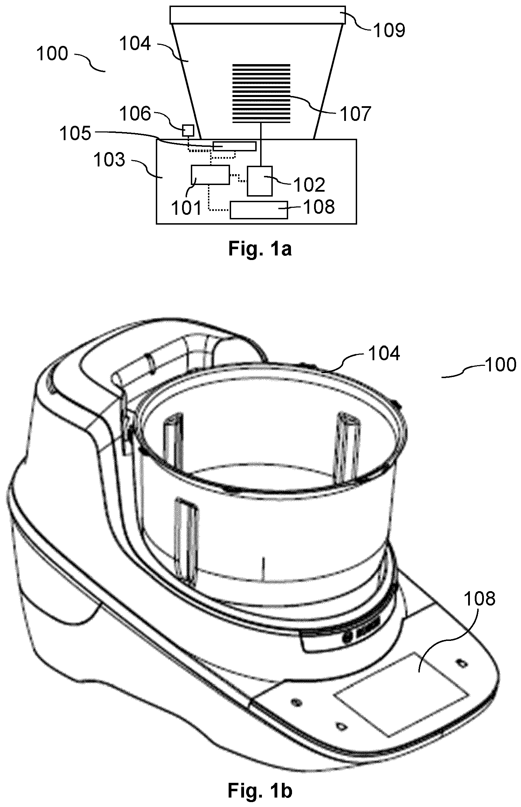

As outlined above, the present document is directed at providing means for detecting the tool which is being used within a kitchen appliance in an efficient and reliable manner, notably for increasing the safety and/or the comfort of use of the appliance. In this context, Fig. 1a shows a block diagram of an example appliance 100 which comprises a base unit 103 onto which a receptacle 104, in particular a bowl, is placed. The receptacle 104 may be configured to be covered by a lid 109. The base unit 103 comprises a motor 102 which is configured to drive a tool 107 which is located within the receptable 104. The tool 107 may be detachable and/or exchangeable. In particular, the appliance 100 may be configured to be used with an arbitrary tool 107 out of a pre-determined set of K different tools 107.

The appliance 100 may comprise a heating unit 106 (which may alternatively, or in addition, be integrated into the receptacle 104) for heating the receptacle 104, e.g., for allowing a food item to be cooked within the receptacle 104. Furthermore, the appliance 100 may comprise a weighing unit 105 which is configured to measure the weight of the one or more food items which are placed within the receptacle 104 or onto the appliance 100 (since the weighting unit 105 may be integrated at the bottom of the appliance 100). In addition, the appliance 100 may comprise a user interface 108 which allows a user to interact with the appliance 100, e.g., for activating or for deactivating the motor 102. In addition, the appliance 100 may be connected to the internet, to another appliance and/or to a (smart) device via a (wireless) communication interface such as WLAN. A control unit 101 of the appliance 100 may be configured to operate the appliance 100, in particular the motor 102 and/or the heating unit 106, in dependence of a user input received via the user interface 108 (of the appliance 100 or of a remote device).

Fig. 1b shows a perspective view of an exemplary appliance 100.

Operation of the appliance 100 may vary depending on the tool 107 which is being used within the receptacle 104. By way of example, the rotation speed, in particular a maximum speed, of the motor 102 may be dependent on the tool 107 which is being used. The control unit 101 may be configured to request the user via the user interface 108 to manually identify the tool 107 that has been placed within the receptacle 104. Such a manual identification process is prone to errors and is relatively uncomfortable for the user.

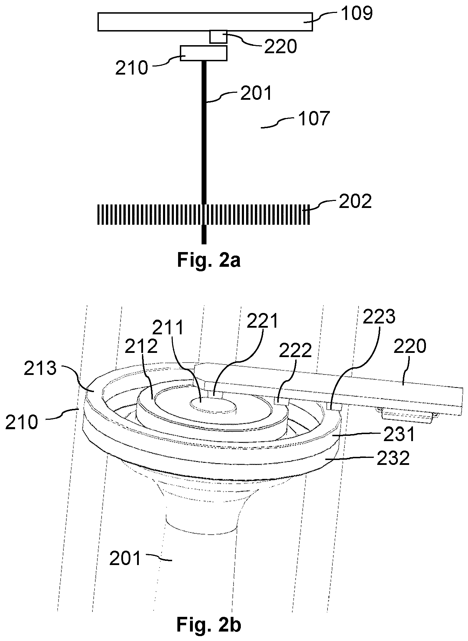

Fig. 2a shows an example tool 107 which exhibits a rotational axis 201 around which the tool 107 is rotated. The tool element 202 which interacts with the content of the receptacle 104 is attached to the axis 201, and by consequence is rotated around the axis 201. The tool 107 comprises an identification component 210 which is attached to the axis 201, and by consequence is also rotated around the axis 201, when the tool 107 is being used.

In the example of Fig. 2a, the identification component 210 of the tool 107 is positioned at the top of the tool 107 which faces the lid 109 of the receptacle 104. A detection unit 220 may be attached to the lid 109. The detection unit 220 may be configured to interact with the identification component 210, in order to provide measurement information for identifying the type of the tool 107.

The identification component 210 may be configured to generate a magnetic field. The detection unit 220 may comprise one or more magnetic sensors, e.g., Hall sensors, for detecting the magnetic field that is generated by the identification component 210. The magnetic field preferably exhibits a rotational symmetry with respect to the axis 201 of the tool 107. As a result of this, the type of the tool 107 may be determined based on the magnetic field, regardless the angular position at which the tool 107 is placed within the receptacle 104.

The identification component 210 may comprise one or more magnetic rings for generating the magnetic field. Figs. 2b to 2e illustrate different magnetic ring configurations for an identification component 210. The identification component 210 of Fig. 2b comprises three different magnetic rings 211, 212, 213 with three different diameters, in particular an inner ring 211, an intermediate ring 212 and an outer ring 213. The detection unit 220 comprises a corresponding number of magnetic sensors 221, 222, 223, in particular an inner sensor 221, an intermediate sensor 222, and an outer sensor 223, wherein each sensor 221, 222, 223 may be configured to determine measurement information regarding the magnetic field component that is generated by the corresponding magnetic ring 211, 212, 213.

Each magnetic ring 211, 212, 213 may comprise a permanent magnet. Furthermore, each magnetic ring 211, 212, 213 may have a particular polarity. In particular, each magnetic ring 211, 212, 213 may have a north pole 231 and a south pole 232, which define the polarity and/or the direction of the magnetic field component which is generated by the respective magnetic ring 211, 212, 213.

In order to encode information into the magnetic field which is generated by an identification component 210, one or more parameters of the magnetic field may be modified. Example parameters are,
- the number M of local peaks (i.e. field components) of the magnetic field; wherein the number M of peaks typically corresponds to the number M of magnetic rings 211, 212, 213 of the identification component 210;
- the polarity or the direction of each magnetic peak (or field component); wherein the polarity of a peak (or field component) is typically defined by the polarity of the magnetic ring 211, 212, 213; and/or
- the field strength or the magnitude of each peak (or field component); wherein the strength of the magnetic field which is generated by a magnetic ring 211, 212, 213 may be varied by the size of the magnetic ring 211, 212, 213.

The identification component 210 shown in Fig. 2b makes use of three magnetic rings 211, 212, 213, wherein the polarity of each ring 211, 212, 213 may take on two different polarity states, e.g.
- a first polarity state, with the north pole 231 being placed on top of the south pole 232; and
- a second polarity state, with the south pole 232 being placed on top of the north pole 231.

Using such an identification component 210, a total of eight different magnetic ring configurations (and corresponding magnetic codes) may be implemented, as shown in Table 1

**Table 1**

| | | | |
|---|---|---|---|
| configuration | first ring | second ring | third ring |
| 1 | 0 | 0 | 0 |
| 2 | 0 | 0 | 1 |
| 3 | 0 | 1 | 0 |
| 4 | 0 | 1 | 1 |
| 5 | 1 | 0 | 0 |
| 6 | 1 | 0 | 1 |
| 7 | 1 | 1 | 0 |
| 8 | 1 | 1 | 1 |

wherein "0" indicates the first polarity state and "1" indicates the second polarity state.

As a further possibility, it may be distinguished, whether or not a ring 211, 212, 213 is present, thereby providing additional magnetic ring configurations (and corresponding magnetic codes), as shown in Table 2 (wherein "j" indicates that the corresponding magnetic ring is not present),

**Table 2**

| configuration | first ring | second ring | third ring |
|---|---|---|---|
| 1 | 0 | 0 | 0 |
| 2 | 0 | 0 | 1 |
| 3 | 0 | 1 | 0 |
| 4 | 0 | 1 | 1 |
| 5 | 1 | 0 | 0 |
| 6 | 1 | 0 | 1 |
| 7 | 1 | 1 | 0 |
| 8 | 1 | 1 | 1 |
| 9 | / | 0 | 0 |
| 10 | / | 0 | 1 |
| 11 | / | 1 | 0 |
| 12 | / | 1 | 1 |
| 13 | / | / | 0 |
| 14 | / | / | 1 |
| 15 | / | 0 | / |
| 16 | / | 1 | / |
| 17 | 0 | / | 0 |
| 18 | 0 | / | 1 |
| 19 | 1 | / | 0 |
| 20 | 1 | / | 1 |
| 21 | 0 | / | / |
| 22 | 1 | / | / |
| 23 | 0 | 0 | / |
| 24 | 0 | 1 | / |
| 25 | 1 | 0 | / |
| 26 | 1 | 1 | / |
| no tool | / | / | / |

Hence, a total of 26 different tools may be detected. Furthermore, the situation "no tool present" may be detected by the last magnetic code in Table 2.

Using only a single magnetic ring 211, the following magnetic codes may be defined (for two different tools and for the situation "no tool present"),

**Table 3**

| configuration | first ring |
|---|---|
| 1 | 0 |
| 2 | 1 |
| no tool | / |

Using two magnetic rings 211, 212, the following magnetic codes may be defined (for eight different tools and for the situation "no tool present"),

**Table 4**

| configuration | first ring | second ring |
|---|---|---|
| 1 | 0 | 0 |
| 2 | 0 | 1 |
| 3 | 1 | 0 |
| 4 | 1 | 1 |
| 5 | / | 0 |
| 6 | / | 1 |
| 7 | 0 | / |
| 8 | 1 | / |
| No tool | / | / |

The different magnetic ring configurations (and the corresponding magnetic codes) may be assigned to different types of tool 107, thereby enabling the control unit 101 of the appliance 100 to detect the tool 107, i.e., the type of the tool 107, which is used within the appliance 100 in an efficient and reliable manner.

The number of different magnetic ring configurations (i.e. the number of different magnetic codes), which may be generated using the one or more magnetic rings 211, 212, 213 of an identification component 210, may be increased by increasing the number of possible polarity states of a magnetic ring 211, 212, 213. By way of example, the number of different polarity states may be increased by also considering
- a third polarity state, with the north pole 231 being placed in radial direction outside of the ring, and the south pole 232 being placed in radial direction inside of the ring; and
- a fourth polarity state, with the south pole 232 being placed in radial direction outside of the ring, and the north pole 231 being placed in radial direction inside of the ring.

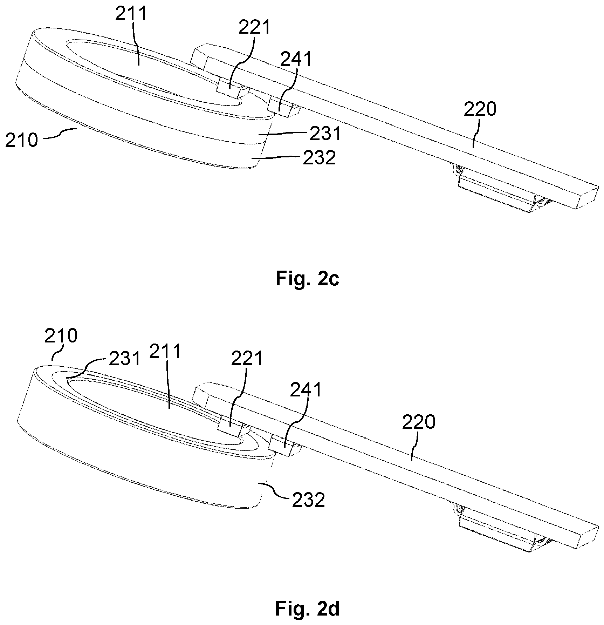

Figs. 2c and 2d show a magnetic ring 211 in the first or second polarity state (Fig. 2c) and in the third or fourth polarity state (Fig. 2d). The detection unit 220 may comprise two different magnetic sensors 221, 241 for the magnetic ring 211, a first magnetic sensor 221 which is placed at the inner edge of the magnetic ring 211 and a second magnetic sensor 241 which is placed at the outer edge of the magnetic ring 211. By making use of two magnetic sensors 221, 241 for a magnetic ring 211, the third and fourth polarity states may be detected in a reliable manner.

The number of different magnetic ring configurations, which may be generated using the one or more magnetic rings 211, 212, 213 of an identification component 210, may be increased by allowing an additional state where no magnetic ring 211 is used at a particular radial distance from the rotational axis 201. By consequence, the magnetic field which is generated by the identification component 210 does not comprise a peak (or field component) at the particular radial distance from the axis 201. Hence, two different states may be considered,
- a "peak present" state, indicating that a magnetic ring 211 is present (at a particular radial distance from the axis 201); and
- a "no peak present" state, indicating that no magnetic ring 211 is present (at the particular radial distance from the axis 201).

Alternatively, or in addition, the number M of magnetic rings 211, 212, 213 of an identification component 210 may be varied, in particular increased, for varying, in particular for increasing, the number of possible different magnetic ring configurations. Alternatively, or in addition, the magnitude and/or the strength of the magnetic field which is generated by a magnetic ring 211, 212, 213 may be varied, for increasing the number of different states. By way of example, N different types of magnetic rings 211, 212, 213 may be used, which are configured to generate magnetic fields with N different field strength values. The detection unit 220 may be configured to determine the strength of the magnetic field which is generated by a magnetic ring 211, 212, 213.

Overall, an identification component 210 may be considered,
- which comprises M different magnetic rings 211, 212, 213 at M different radial distances from the rotational axis 201 of the appliance 100; with M≥2, (or at M different locations of the identification component 210);
- with each magnetic ring 211, 212, 213 being able to take on Q different polarity states; with Q≥1; and
- with each magnetic ring 211, 212, 213 being able to take on N different magnetic field strength values; with N≥1.

An identification component 210 which makes use of all of the above-mentioned parameters may provide (Q*N)^{M} different magnetic ring configurations (i.e. magnetic codes), wherein each one of the different magnetic ring configurations may be assigned to a different type of tool 107. The number of different magnetic ring configurations (or corresponding magnetic codes) may be further increased, if it taken into account whether a magnetic ring 211, 212, 213 is present or absent.

The control unit 101 may be configured to determine the magnetic ring configuration of the identification component 210 of the tool 107 which is being used within the appliance 100 based on the measurement information that is provided by the detection unit 220. Furthermore, the control unit 101 may be configured to determine the type of the tool 107 which is being used within the appliance 100 based on the determined magnetic ring configuration. Alternatively, or in addition, the control unit 101 may be configured to operate the appliance 100 in dependence on the determined magnetic ring configuration and/or in dependence of the determined type of the tool 107 which is being used within the appliance 100. By doing this, the comfort of use and/or the safety of the appliance 100 may be increased.

Hence, the usage of magnetic elements 211, 212, 213, in particular magnets and/or magnetic rings, which are placed in or on an attachment or a tool 107 of an appliance 100 is described for detecting and/or for recognizing the attachment or tool 107. The one or more magnetic rings 211, 212, 213 are detected using a magnetic tool reader, i.e., a detection unit 220, which comprises at least one magnetic sensor 221, 222, 223, 241, such as a Hall effect sensor, wherein the magnetic sensor is configured to detect and/or to measure the amplitude of a magnetic field and/or the polarisation of a magnetic field.

The one or more magnetic sensors 221, 222, 223, 241 may be placed at a position above or near to the edge of the one or more magnetic elements 211, 212, 213. A unique combination of magnetic ring polarisations (i.e. polarity states) may be used for each of a plurality of different tools 107, thereby providing a reliable tool 107 detection. In view of the fact that the magnetic rings 211, 212, 213 are rotationally invariant, the tool detection may be performed in an arbitrary position of the tool 107, with the tool 107 spinning or standing still, even before the operation of the tool/attachment 107.

Hence, an identification component 210 comprising one or more magnetic rings 211, 212, 213 may be integrated into/onto an attachment or tool 107. Furthermore, a magnetic tool reader 220 may be integrated e.g. on the bowl cover 109, thereby providing a tool detection system.

Different magnetic rings 211, 212, 213 with various different IDs (inner diameters) and/or ODs (outer diameters) may be used. A combination of one or more (typically two or three) magnetic rings 211, 212, 213 may allow a certain number of different tools/attachments 107 to be uniquely identified and/or detected.

The magnetic tool reader 220, i.e. the detection unit, may comprise an element holder, e.g. a printed circuit board (PCB), with one or more magnetic sensors 221, 222, 223, 241. Furthermore, the reader 220 may comprise an integrated circuit (IC) which is configured to read out the one or more magnetic sensors and which may be configured to decode the magnetic code of the identification component 210 for detecting the tool 107. Additional elements which are typically used are resistors, capacitors, amplifiers, transistors, etc. which are not shown in Figs. 2b to 2e. The integrated circuit may be a dedicated part of the magnetic tool reader 220 or may be included on other electronics of the appliance 100. By way of example, the main electronic of the appliance 100 may be used to decode the magnetic code of the identification component 210.

Various different combinations of magnetic rings 211, 212, 213 and/or magnet polarisations may be used, in order to increase the number of different magnetic codes which can be provided using a given number of magnetic rings 211, 212, 213, thereby increasing the number of different tools 107 that can be uniquely detected.

As shown in Fig. 2b, the one or more magnetic sensors 221, 222, 223 may be placed directly above the one or more corresponding magnetic rings 211, 212, 213 (along the rotational axis 201). It should be noted that a central magnetic ring 211 having an inner diameter of zero may actually have the form of a button magnet.

By way of example, a single magnetic ring 211 and a single magnetic sensor 221 may be used, thereby allowing two different tools 107 to be detected. Furthermore, it may be detected that no tool 107 is present. When using two magnetic rings 211, 212 and two corresponding magnetic sensors 221, 222 eight different tools 107 may be detected (as shown in table 4).

When using three magnetic rings 211, 212, 213 and the possibility of omitting each one of the magnetic rings 211, 212, 213 a total of 26 different tools 107 may be detected, plus the condition that no tool 107 is present within the appliance 100 (as shown in table 2).

As shown in Figs. 2c and 2d, one or more magnetic sensors 221, 241 may be on different sides, in particular on the inner side and on the outer side, of each magnetic ring 211.

Using two magnetic sensors 221, 241 for a single magnetic ring 211, wherein the magnetic ring 211 may be placed in Q=4 different polarity states (two different polarity states in radial direction, i.e. horizontal, and two different polarity states in axial direction, i.e. vertical), four different codes for four different tools 107 may be provided. The magnetic sensors 221, 241 may be placed near the inner edge and near the outer edge of the magnetic ring 211, respectively.

Figs. 2b to 2d illustrate identification components 210 and corresponding detection units 220, which comprise different magnetic rings 211, 212, 213 at different radial distances from the rotational axis 201. It should be noted that the one or more identification components 210 may (alternatively, or in addition) be located above the one or more corresponding detection units 220.

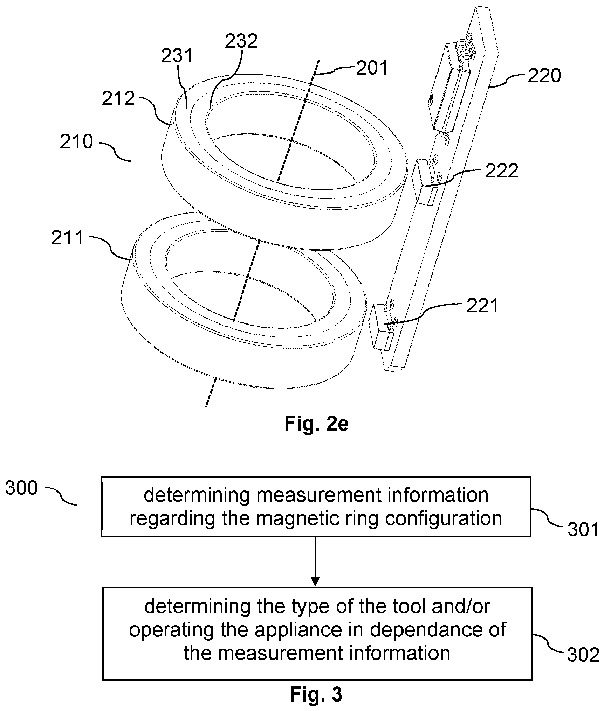

Fig. 2e shows an identification component 210 and a corresponding detection unit 220, wherein the identification component 210 comprises different magnetic rings 211, 212 that are arranged side-by-side along the rotational axis 201. The detection unit 220 comprises magnetic sensors 221, 221 which are arranged in a corresponding manner side-by-side along the rotational axis 201. The different magnetic rings 211, 212 may each have the same diameter. Each magnetic ring 211, 212 may have a plurality of different polarity states. All aspects which have been described for magnetic rings 211, 212, 213 that are arranged along the radial direction are also applicable to magnetic rings 211, 212 which are arranged along the axial direction. It should be noted that the one or more identification components 210 may (alternatively, or in addition) be located further away from the axis 201 than the one or more corresponding detection units 220 (in the radial direction). This may be beneficial, e.g. when integrating the one or more detection units 220 with the motor 102 that drives the tool 107.

Using the means that have been described in the present document, an appliance 100 is enabled to recognize the presence or the lack of an attachment/tool 107 in a reliable manner. Furthermore, the type of the attachment/tool 107 may be determined. This information may be used to provide a feedback to the user via the user interface 108 of the appliance 100 (e.g. "tool missing" or "wrong tool inserted"). Furthermore, the recipe used for processing a food item which is placed within the receptacle 104 may be adapted to the detected tool 107. Alternatively, or in addition, one or more operational parameters of the appliance 100 may be adapted in dependence of the detected tool 107, such as
- the speed and/or speed limitation;
- the power and/or power limitation;
- the torque and/or torque limitation;
- the processing time optimization and/or limitation; and/or
- the speed ramp-up and/or ramp-down.

Alternatively, or in addition, the actual usage time of each individual tool 107 may be tracked. Feedback may be provided to the user via the user interface 108 regarding the actual (cumulated) usage time (e.g. for indicating that a tool 107 should be changed or sharpened). Alternatively, or in addition, the one or more operational parameters may be adapted to the actual (cumulated) usage time of the tool 107. By doing this, the comfort of use, the performance and/or the safety of the appliance 100 may be increased in an efficient manner.

Fig. 3 shows a flow chart of an example (possibly computer-implemented) method 300 for detecting a tool 107 of an appliance 100, in particular a kitchen appliance. The appliance 100 comprises a motor 102 configured to drive a tool 107 which is attached to the motor 102. Furthermore, the appliance 100 comprises a receptacle 104 configured to take up content, notably a food item, that is to be processed within the receptacle 104 using the tool 107 which is attached to the motor 102.

The appliance 100 may be configured such that the tool 107 which is attached to the motor 102 is selectable in an interchangeable manner from a set of K different tools 107, with K≥ 2. Example tools 107 are: one or more different knifes, one or more different shredders, one or more dough hooks, etc. Each tool 107 from the set of K different tools 107 may comprise an identification component 210 which is configured to generate a magnetic field that is indicative of a magnetic code from a set of K different magnetic codes for the respective K different tools 107. In other word, the identification component 210 may be configured to taken on K different configurations for generating K different magnetic fields which are indicative of K different magnetic codes, respectively. The K different magnetic codes may be associated with K different tools, e.g. using a mapping table.

The method 300 comprises determining 301 measurement information regarding the magnetic field that is generated by the identification component 210 of the tool 107 which is attached to the motor 102. The measurement information may be measured using the detection unit 220 described in the present document.

Furthermore, the method 300 may comprise determining 302, based on the measurement information, whether or not a tool 107 and/or which tool 107 from the set of K different tools 107 is attached to the motor 102. Alternatively, or in addition, the method 300 may comprise operating 302 the appliance 100 in dependence of the measurement information, in particular in dependence of whether or not a tool 107 and/or in dependence of which tool 107 from the set of K different tools 107 is attached to the motor 102.

It should be noted that the description and drawings merely illustrate the principles of the proposed methods and systems. Those skilled in the art will be able to implement various arrangements that, although not explicitly described or shown herein, embody the principles of the invention and are included within its spirit and scope. Furthermore, all examples and embodiment outlined in the present document are principally intended expressly to be only for explanatory purposes to help the reader in understanding the principles of the proposed methods and systems. Furthermore, all statements herein providing principles, aspects, and embodiments of the invention, as well as specific examples thereof, are intended to encompass equivalents thereof.

## Claims

1. An appliance (100), wherein
- the appliance comprises a set of K different tools, with K≥2,
- the appliance (100) further comprises a motor (102), configured to drive any tool (107) of the set of tools which is attached to the motor (102);
- the motor (102) is configured to rotate the tool (107) which is attached to the motor (102) around a rotational axis (201);
- the appliance (100) comprises a receptacle (104), configured to take up content that is to be processed within the receptacle (104) using the tool (107) which is attached to and/or driven by the motor (102);
- the appliance (100) is configured such that the tool (107) which is attached to and/or driven by the motor (102) is selectable in an interchangeable manner from a set of K different tools (107),
- each tool (107) from the set of K different tools (107) comprises an identification component (210) which is configured to generate a magnetic field that is indicative of a magnetic code from a set of K different magnetic codes for the respective K different tools (107);
- the identification component (210) of a tool (107) from the set of K different tools (107) comprises M magnetic elements (211, 212, 213), with M≥2, at M different locations within the identification component (210);
- each of the M magnetic elements (211, 212, 213) is configured to generate a magnetic field component of the overall magnetic field which is generated by the identification component (210);
- at least two of the M different magnetic elements (211, 212, 213) are located at different radial distances from the rotational axis (201), and/or at least two of the M different magnetic elements (211, 212, 213) are located side-by-side along the rotational axis (201);
- the appliance (100) comprises a detection unit (220), configured to provide measurement information regarding the magnetic field that is generated by the identification component (210) of the tool (107) which is attached to and/or driven by the motor (102); and
- the appliance (100) comprises a control unit (101) which is configured to
- determine, based on the measurement information, whether or not a tool (107) and/or which tool (107) from the set of K different tools (107) is attached to and/or driven by the motor (102); and/or
- operate the appliance (100) in dependence of the measurement information, in particular in dependence of whether or not a tool (107) and/or in dependence of which tool (107) from the set of K different tools (107) is attached to and/or driven by the motor (102).

2. The appliance (100) of claim 1, wherein
- the motor (102) is configured to rotate the tool (107) which is attached to and/or driven by the motor (102) around a rotational axis (201); and
- the identification component (210) of a tool (107) from the set of K different tools (107) is configured to generate a magnetic field which is rotationally invariant with respect to a rotation around the rotational axis (201).

3. The appliance (100) according to any previous claim, wherein a magnetic element (211, 212, 213) is a magnetic ring which is arranged around a rotational axis (201) of the tool (107).

4. The appliance (100) according to any previous claim, wherein
- each of the M magnetic elements (211, 212, 213) exhibits one polarity state out of a set of Q different polarity states, with Q≥2; and
- the Q different polarity states differ with regards to a North-South orientation of the magnetic field component which is generated by the respective magnetic element (211, 212, 213); and
- the Q different polarity states notably comprise
- a first polarity state having an upper north pole (231) and a lower south pole (232) with respect to a vertical rotational axis (201) of the tool (107); and/or
- a second polarity state having an upper south pole (232) and a lower north pole (231) with respect to the vertical rotational axis (201); and/or
- a third polarity state having an inner south pole (232) and an outer north pole (231) along a radial direction with respect to the vertical rotational axis (201); and/or
- a fourth polarity state having an inner north pole (231) and an outer south pole (232) along the radial direction with respect to the vertical rotational axis (201).

5. The appliance (100) according to any previous claim, wherein each of the M magnetic elements (211, 212, 213) is configured to generate a magnetic field component having one magnetic field strength out of a set of N different magnetic field strengths, with N≥2.

6. The appliance (100) according to any previous claim, wherein
- the detection unit (220) comprises M different magnetic sensors (221, 222, 223, 241) for the respective M magnetic elements (211, 212, 213); and
- a magnetic sensor (221, 222, 223, 241) is configured to capture measurement information regarding the magnetic field component which is generated by the respective magnetic element (211, 212, 213).

7. The appliance (100) according to claim 6, wherein
- a magnetic sensor (221) from the M different magnetic sensors (221, 222, 223, 241) is aligned with the respective magnetic element (211) from the M magnetic elements (211, 212, 213); and/or
- a first magnetic sensor (221) is aligned with a first edge and a second magnetic sensor (241) is aligned with a second edge of a single magnetic element (211) from the M magnetic elements (211, 212, 213).

8. The appliance (100) according to any previous claim, wherein
- the identification component (210) of a tool (107) from the set of K different tools (107) is configured to generate a magnetic field which comprises M different field components; and
- each field component exhibits one out of Q different polarity states, with Q≥1, and N different field strengths, with N≥1, for providing (Q*N+1)^{M}-1) different magnetic codes, if considering the presence or non-presence of each of the M different field components.

9. The appliance (100) according to claim 8, wherein
- the detection unit (220) is configured to determine measurement information which, for each one of the M different field components, indicates
- whether or not the field component is present within the magnetic field; and/or
- the polarity state out of the Q different polarity states; and/or
- the field strength out of the N different field strengths; and
- the control unit (101) is configured to determine the magnetic code which is indicated by the identification component (210) of the tool (107) which is attached to and/or driven by the motor (102) based on the measurement information

10. The appliance (100) according to any previous claim, wherein the control unit (101) is configured to
- determine the magnetic code which is indicated by the identification component (210) of the tool (107) which is attached to and/or driven by the motor (102); and
- determine the tool (107) from the set of K different tools (107) using a pre-determined mapping between the set of K different magnetic codes and the set of K different tools (107).

11. The appliance (100) according to any previous claim, wherein
- the control unit (101) is configured to set one or more operational parameters of the motor (102) in dependence of the tool (107) which is attached to and/or driven by the motor (102); and
- the one or more operational parameters comprise
- a speed and/or a speed limitation of the motor (102);
- a ramp-up and/or ramp-down of the speed of the motor (102);
- a torque and/or a torque limitation of the motor (102); and/or
- a duration of an operation of the motor (102).

12. The appliance (100) according to any previous claim, wherein the control unit (101) is configured to
- track, for each tool (107) from the set of K different tools (107), a cumulated usage time of the respective tool (107); and
- operate the appliance (100) in dependence of the cumulated usage time of the tool (107) which is attached to and/or driven by the motor (102).

13. A method (300) for detecting a tool (107) of an appliance (100), wherein
- the appliance (100) comprises a motor (102), configured to drive a tool (107) which is attached to the motor (102);
- the motor (102) is configured to rotate the tool (107) which is attached to the motor (102) around a rotational axis (201);
- the appliance (100) comprises a receptacle (104), configured to take up content that is to be processed within the receptacle (104) using the tool (107) which is attached to and/or driven by the motor (102);
- the appliance (100) is configured such that the tool (107) which is attached to and/or driven by the motor (102) is selectable in an interchangeable manner from a set of K different tools (107), with K≥ 2;
- each tool (107) from the set of K different tools (107) comprises an identification component (210) which is configured to generate a magnetic field that is indicative of a magnetic code from a set of K different magnetic codes for the respective K different tools (107);
- the identification component (210) of a tool (107) from the set of K different tools (107) comprises M magnetic elements (211, 212, 213), with M≥2, at M different locations within the identification component (210);
- each of the M magnetic elements (211, 212, 213) is configured to generate a magnetic field component of the overall magnetic field which is generated by the identification component (210);
- at least two of the M different magnetic elements (211, 212, 213) are located at different radial distances from the rotational axis (201), and/or at least two of the M different magnetic elements (211, 212, 213) are located side-by-side along the rotational axis (201); and
the method (300) comprises,
- determining (301) measurement information regarding the magnetic field that is generated by the identification component (210) of the tool (107) which is attached to and/or driven by the motor (102); and
- determining (302), based on the measurement information, whether or not a tool (107) and/or which tool (107) from the set of K different tools (107) is attached to and/or driven by the motor (102); and/or operating the appliance (100) in dependence of the measurement information, in particular in dependence of whether or not a tool (107) and/or in dependence of which tool (107) from the set of K different tools (107) is attached to and/or driven by the motor (102).

## Patentansprüche

1. Gerät (100), wobei
- das Gerät einen Satz von K verschiedenen Werkzeugen umfasst, wobei K≥2,
- das Gerät (100) ferner einen Motor (102) umfasst, der so konfiguriert ist, dass er ein beliebiges an dem Motor (102) angebrachtes Werkzeug (107) aus dem Satz Werkzeuge antreibt,
- der Motor (102) so konfiguriert ist, dass er das an ihm angebrachte Werkzeug (107) um eine Rotationsachse (201) dreht,
- das Gerät (100) einen Behälter (104) umfasst, der so konfiguriert ist, dass er Inhalt aufnimmt, der darin mithilfe des an dem Motor (102) angebrachten und/oder von diesem angetriebenen Werkzeugs (107) verarbeitet werden soll,
- das Gerät (100) so konfiguriert ist, dass das an dem Motor (102) angebrachte und/oder von diesem angetriebene Werkzeug (107) auf auswechselbare Weise aus einem Satz von K verschiedenen Werkzeugen (107) ausgewählt werden kann,
- jedes Werkzeug (107) aus dem Satz von K verschiedenen Werkzeugen (107) eine Identifizierungskomponente (210) umfasst, die so konfiguriert ist, dass sie ein Magnetfeld erzeugt, das einen Magnetcode aus einem Satz von K verschiedenen Magnetcodes für das jeweilige der K verschiedenen Werkzeuge (107) angibt,
- die Identifizierungskomponente (210) eines Werkzeugs (107) aus dem Satz von K verschiedenen Werkzeugen (107) M Magnetelemente (211, 212, 213), wobei M≥2, an M verschiedenen Stellen in der Identifizierungskomponente (210) umfasst,
- jedes der M Magnetelemente (211, 212, 213) so konfiguriert ist, dass es eine Magnetfeldkomponente des von der Identifizierungskomponente (210) erzeugten Gesamtmagnetfelds erzeugt,
- mindestens zwei der M verschiedenen Magnetelemente (211, 212, 213) in verschiedenen radialen Abständen zur Rotationsachse (201) und/oder an der Rotationsachse (201) nebeneinander liegen,
- das Gerät (100) eine Erkennungseinheit (220) umfasst, die so konfiguriert ist, dass sie Messinformationen zu dem Magnetfeld bereitstellt, das von der Identifizierungskomponente (210) des an dem Motor (102) angebrachten und/oder von diesem angetriebenen Werkzeugs (107) erzeugt wird, und
- das Gerät (100) eine Steuereinheit (101) umfasst, die so konfiguriert ist, dass sie
- auf der Grundlage der Messinformationen bestimmt, ob und/oder welches Werkzeug (107) aus dem Satz von K verschiedenen Werkzeugen (107) an dem Motor (102) angebracht ist und/oder von diesem angetrieben wird, und/oder
- das Gerät (100) in Abhängigkeit von den Messinformationen, insbesondere in Abhängigkeit davon betreibt, ob und/oder welches Werkzeug (107) aus dem Satz von K verschiedenen Werkzeugen (107) an dem Motor (102) angebracht ist und/oder von diesem angetrieben wird.

2. Gerät (100) nach Anspruch 1, wobei
- der Motor (102) so konfiguriert ist, dass er das an dem Motor (102) angebrachte und/oder von diesem angetriebene Werkzeug (107) um eine Rotationsachse (201) dreht, und
- die Identifizierungskomponente (210) eines Werkzeugs (107) aus dem Satz von K verschiedenen Werkzeugen (107) so konfiguriert ist, dass sie ein Magnetfeld erzeugt, das in Bezug auf eine Rotation um die Rotationsachse (201) rotationsinvariant ist.

3. Gerät (100) nach einem der vorhergehenden Ansprüche, wobei es sich bei einem Magnetelement (211, 212, 213) um einen Magnetring handelt, der um eine Rotationsachse (201) des Werkzeugs (107) angeordnet ist.

4. Gerät (100) nach einem der vorhergehenden Ansprüche, wobei
- jedes der M Magnetelemente (211, 212, 213) einen Polungszustand aus einem Satz von Q verschiedenen Polungszuständen aufweist, wobei Q≥2, und
- sich die Q verschiedenen Polungszustände in Bezug auf eine Nord-Süd-Ausrichtung der Magnetfeldkomponente unterscheiden, die von dem jeweiligen Magnetelement (211, 212, 213) erzeugt wird, und
- die Q verschiedenen Polungszustände insbesondere Folgendes umfassen:
- einen ersten Polungszustand mit einem oberen Nordpol (231) und einem unteren Südpol (232) in Bezug auf eine vertikale Rotationsachse (201) des Werkzeugs (107) und/oder
- einen zweiten Polungszustand mit einem oberen Südpol (232) und einem unteren Nordpol (231) in Bezug auf die vertikale Rotationsachse (201) und/oder
- einen dritten Polungszustand mit einem innenliegenden Südpol (232) und einem außenliegenden Nordpol (231) in radialer Richtung in Bezug auf die vertikale Rotationsachse (201) und/oder
- einen vierten Polungszustand mit einem innenliegenden Nordpol (231) und einem außenliegenden Südpol (232) in radialer Richtung in Bezug auf die vertikale Rotationsachse (201).

5. Gerät (100) nach einem der vorhergehenden Ansprüche, wobei jedes der M Magnetelemente (211, 212, 213) so konfiguriert ist, dass es eine Magnetfeldkomponente mit einer Magnetfeldstärke aus einem Satz von N verschiedenen Magnetfeldstärken erzeugt, wobei N≥2.

6. Gerät (100) nach einem der vorhergehenden Ansprüche, wobei
- die Erkennungseinheit (220) M verschiedene Magnetsensoren (221, 222, 223, 241) für die jeweiligen M Magnetelemente (211, 212, 213) umfasst und
- ein Magnetsensor (221, 222, 223, 241) so konfiguriert ist, dass er Messinformationen zu der Magnetfeldkomponente erfasst, die von dem jeweiligen Magnetelement (211, 212, 213) erzeugt wird.

7. Gerät (100) nach Anspruch 6, wobei
- ein Magnetsensor (221) unter den M verschiedenen Magnetsensoren (221, 222, 223, 241) auf das jeweilige Magnetelement (211) unter den M Magnetelementen (211, 212, 213) ausgerichtet ist, und/oder
- ein erster Magnetsensor (221) auf einen ersten Rand und ein zweiter Magnetsensor (241) auf einen zweiten Rand eines einzelnen Magnetelements (211) unter den M Magnetelementen (211, 212, 213) ausgerichtet ist.

8. Gerät (100) nach einem der vorhergehenden Ansprüche, wobei
- die Identifizierungskomponente (210) eines Werkzeugs (107) aus dem Satz von K verschiedenen Werkzeugen (107) so konfiguriert ist, dass sie ein Magnetfeld erzeugt, das M verschiedene Feldkomponenten umfasst, und
- jede Feldkomponente einen von Q verschiedenen Polungszuständen, wobei Q≥1, und eine von N verschiedenen Feldstärken, wobei N≥1, zum Bereitstellen von (Q*N+1)M-1) verschiedenen Magnetcodes aufweist, wenn das Vorhandensein oder Nichtvorhandensein jeder der M verschiedenen Feldkomponenten berücksichtigt wird.

9. Gerät (100) nach Anspruch 8, wobei
- die Erkennungseinheit (220) so konfiguriert ist, dass sie Messinformationen bestimmt, die für jede der M verschiedenen Feldkomponenten Folgendes angeben:
- ob die Feldkomponente in dem Magnetfeld vorhanden ist und/oder
- den Polungszustand unter den Q verschiedenen Polungszuständen und/oder
- die Feldstärke unter den N verschiedenen Feldstärken, und
- die Steuereinheit (101) so konfiguriert ist, dass sie auf der Grundlage der Messinformationen den Magnetcode bestimmt, der von der Identifizierungskomponente (210) des an dem Motor (102) angebrachten und/oder von diesem angetriebenen Werkzeugs (107) angegeben wird.

10. Gerät (100) nach einem der vorhergehenden Ansprüche, wobei die Steuereinheit (101) so konfiguriert ist, dass sie:
- den Magnetcode bestimmt, der von der Identifizierungskomponente (210) des an dem Motor (102) angebrachten und/oder von diesem angetriebenen Werkzeugs (107) angegeben wird, und
- mithilfe einer vorgegebenen Zuordnung zwischen dem Satz von K verschiedenen Magnetcodes und dem Satz von K verschiedenen Werkzeugen (107) das Werkzeug (107) aus dem Satz von K verschiedenen Werkzeugen (107) bestimmt.

11. Gerät (100) nach einem der vorhergehenden Ansprüche, wobei
- die Steuereinheit (101) so konfiguriert ist, dass sie in Abhängigkeit von dem am Motor (102) angebrachten und/oder von diesem angetriebenen Werkzeug (107) einen oder mehrere Betriebsparameter des Motors (102) einstellt, und
- der eine oder die mehreren Betriebsparameter Folgendes umfassen:
- eine Drehzahl und/oder Drehzahlbegrenzung des Motors (102),
- ein Hoch- und/oder Herunterfahren der Drehzahl des Motors (102),
- ein Drehmoment und/oder eine Drehmomentbegrenzung des Motors (102) und/oder
- eine Dauer des Betriebs des Motors (102).

12. Gerät (100) nach einem der vorhergehenden Ansprüche, wobei die Steuereinheit (101) so konfiguriert ist, dass sie:
- für jedes Werkzeug (107) aus dem Satz von K verschiedenen Werkzeugen (107) eine kumulierte Nutzungsdauer registriert und
- das Gerät (100) in Abhängigkeit von der kumulierten Nutzungsdauer des am Motor (102) angebrachten und/oder von diesem angetriebenen Werkzeugs (107) betreibt.

13. Verfahren (300) zum Erkennen eines Werkzeugs (107) für ein Gerät (100), wobei
- das Gerät (100) einen Motor (102) umfasst, der so konfiguriert ist, dass er ein an ihm angebrachtes Werkzeug (107) antreibt,
- der Motor (102) so konfiguriert ist, dass er das an ihm angebrachte Werkzeug (107) um eine Rotationsachse (201) dreht,
- das Gerät (100) einen Behälter (104) umfasst, der so konfiguriert ist, dass er Inhalt aufnimmt, der darin mithilfe des an dem Motor (102) angebrachten und/oder von diesem angetriebenen Werkzeugs (107) verarbeitet werden soll,
- das Gerät (100) so konfiguriert ist, dass das an dem Motor angebrachte und/oder von diesem angetriebene Werkzeug (107) auf auswechselbare Weise aus einem Satz von K verschiedenen Werkzeugen (107) ausgewählt werden kann, wobei K≥2,
- jedes Werkzeug (107) aus dem Satz von K verschiedenen Werkzeugen (107) eine Identifizierungskomponente (210) umfasst, die so konfiguriert ist, dass sie ein Magnetfeld erzeugt, das einen Magnetcode aus einem Satz von K verschiedenen Magnetcodes für das jeweilige der K verschiedenen Werkzeuge (107) angibt,
- die Identifizierungskomponente (210) eines Werkzeugs (107) aus dem Satz von K verschiedenen Werkzeugen (107) M Magnetelemente (211, 212, 213), wobei M≥2, an M verschiedenen Stellen in der Identifizierungskomponente (210) umfasst,
- jedes der M Magnetelemente (211, 212, 213) so konfiguriert ist, dass es eine Magnetfeldkomponente des von der Identifizierungskomponente (210) erzeugten Gesamtmagnetfelds erzeugt,
- mindestens zwei der M verschiedenen Magnetelemente (211, 212, 213) in unterschiedlichen radialen Abständen zur Rotationsachse (201) und/oder an der Rotationsachse (201) nebeneinander liegen und
das Verfahren (300) Folgendes umfasst:
- Bestimmen (301) von Messinformationen zu dem Magnetfeld, das von der Identifizierungskomponente (210) des am Motor (102) angebrachten und/oder von diesem angetriebenen Werkzeugs (107) erzeugt wird, und
- Bestimmen (302), ob und/oder welches Werkzeug (107) aus dem Satz von K verschiedenen Werkzeugen (107) an dem Motor (102) angebracht ist und/oder von diesem angetrieben wird, auf der Grundlage der Messinformationen und/oder Betreiben des Geräts (100) in Abhängigkeit von den Messinformationen, insbesondere in Abhängigkeit davon, ob und/oder welches Werkzeug (107) aus dem Satz von K verschiedenen Werkzeugen (107) an dem Motor (102) angebracht ist.

## Revendications

1. Appareil (100), dans lequel :
- l'appareil comprend un ensemble de K outils différents, où K ≥ 2,
- l'appareil (100) comprend en outre un moteur (102) configuré pour entraîner un outil quelconque (107) de l'ensemble d'outils qui est fixé au moteur (102),
- le moteur (102) est configuré pour faire tourner l'outil (107) qui est fixé sur le moteur (102) autour d'un axe de rotation (201),
- l'appareil (100) comprend un réceptacle (104), configuré pour recevoir un contenu qui doit être traité dans le réceptacle (104) au moyen de l'outil (107) qui est fixé au et/ou entraîné par le moteur (102),
- l'appareil (100) est configuré de sorte que l'outil (107) qui est fixé au et/ou entraîné par le moteur (102) peut être sélectionné de façon interchangeable à partir d'un ensemble de K différents outils (107),
- chaque outil (107) de l'ensemble de K différents outils (107) comprend un composant d'identification (210) qui est configuré pour générer un champ magnétique qui indique un code magnétique parmi un ensemble de K codes magnétiques différents pour les K différents outils respectifs (107),
- le composant d'identification (210) d'un outil (107) de l'ensemble des K différents outils (107) comprend M éléments magnétiques (211, 212, 213), où M >_ 2, à M emplacements différents dans le composant d'identification (210),
- chacun des M éléments magnétiques (211, 212, 213) est configuré pour générer une composante de champ magnétique du champ magnétique total qui est généré par le composant d'identification (210),
- au moins deux des M éléments magnétiques différents (211, 212, 213) sont situés à des distances radiales différentes de l'axe de rotation (201), et/ou au moins deux des M éléments magnétiques différents (211, 212, 213) sont situés côte à côte le long de l'axe de rotation (201),
- l'appareil (100) comprend une unité de détection (220), configurée pour fournir des informations de mesure concernant le champ magnétique qui est généré par le composant d'identification (210) de l'outil (107) qui est fixé au et/ou entraîné par le moteur (102), et
- l'appareil (100) comprend une unité de commande (101) qui est configurée pour :
- déterminer, sur la base des informations de mesure, si oui ou non un outil (107) et/ou quel outil (107) parmi l'ensemble de K différents outils (107) est fixé au et/ou entraîné par le moteur (102), et/ou
- faire fonctionner l'appareil (100) en fonction des informations de mesure, en particulier en fonction du fait ou non qu'un outil (107) et/ou en fonction de quel outil (107) de l'ensemble de K différents outils (107) est fixé au et/ou entraîné par le moteur (102).

2. Appareil (100) selon la revendication 1, dans lequel :
- le moteur (102) est configuré pour faire tourner l'outil (107) qui est fixé au et/ou entraîné par le moteur (102) autour d'un axe de rotation (201), et
- le composant d'identification (210) d'un outil (107) de l'ensemble de K différents outils (107) est configuré pour générer un champ magnétique qui est invariant en rotation par rapport à une rotation autour de l'axe de rotation (201).

3. Appareil (100) selon l'une quelconque des revendications précédentes, dans lequel un élément magnétique (211, 212, 213) est un anneau magnétique qui est disposé autour d'un axe de rotation (201) de l'outil (107).

4. Appareil (100) selon l'une quelconque des revendications précédentes, dans lequel :
- chacun des M éléments magnétiques (211, 212, 213) présente un état de polarité d'un ensemble de Q états de polarité différents, où Q ≥ 2, et
- les Q différents états de polarité diffèrent quant à une orientation Nord-Sud de la composante de champ magnétique qui est générée par l'élément magnétique respectif (211, 212, 213), et
- les Q états de polarité différents comprennent notamment :
- un premier état de polarité présentant un pôle Nord supérieur (231) et un pôle Sud inférieur (232) par rapport à un axe de rotation vertical (201) de l'outil (107), et/ou
- un deuxième état de polarité présentant un pôle Sud supérieur (232) et un pôle Nord inférieur (231) par rapport à l'axe de rotation vertical (201), et/ou
- un troisième état de polarité présentant un pôle Sud intérieur (232) et un pôle Nord extérieur (231) le long d'une direction radiale par rapport à l'axe de rotation vertical (201), et/ou
- un quatrième état de polarité présentant un pôle Nord intérieur (231) et un pôle Sud extérieur (232) le long de la direction radiale par rapport à l'axe de rotation vertical (201).

5. Appareil (100) selon l'une quelconque des revendications précédentes, dans lequel chacun des M éléments magnétiques (211, 212, 213) est configuré pour générer une composante de champ magnétique présentant une intensité de champ magnétique parmi un ensemble de N intensités différentes de champ magnétique, où N ≥ 2.

6. Appareil (100) selon l'une quelconque des revendications précédentes, dans lequel :
- l'unité de détection (220) comprend M capteurs magnétiques différents (221, 222, 223, 241) pour les M éléments magnétiques respectifs (211, 212, 213), et
- un capteur magnétique (221, 222, 223, 241) est configuré pour capturer des informations de mesure concernant la composante de champ magnétique qui est générée par l'élément magnétique respectif (211, 212, 213).

7. Appareil (100) selon la revendication 6, dans lequel :
- un capteur magnétique (221) des M différents capteurs magnétiques (221, 222, 223, 241) est aligné avec l'élément magnétique respectif (211) des M éléments magnétiques (211, 212, 213), et/ou
- un premier capteur magnétique (221) est aligné avec un premier bord et un deuxième capteur magnétique (241) est aligné avec un deuxième bord d'un élément magnétique unique (211) des M éléments magnétiques (211, 212, 213).

8. Appareil (100) selon l'une quelconque des revendications précédentes, dans lequel :
- le composant d'identification (210) d'un outil (107) de l'ensemble de K différents outils (107) est configuré pour générer un champ magnétique qui comprend M différentes composantes de champ magnétique, et
- chaque composante de champ présente un de Q états de polarité différents, où Q ≥ 1, et N intensités de champ différentes, où N ≥ 1, pour fournir (Q*N+1)^{M}-1) codes magnétiques différents, en considérant la présence ou la non-présence de chacune des M composantes de champ différentes.

9. Appareil (100) selon la revendication 8, dans lequel :
- l'unité de détection (220) est configurée pour déterminer des informations de mesure qui, pour chacune des M composantes de champ différentes, indiquent
- si oui ou non la composante de champ est présente dans le champ magnétique, et/ou
- l'état de polarité parmi les Q différents états de polarité, et/ou
- l'intensité de champ parmi les N intensités de champ différentes, et
- l'unité de commande (101) est configurée pour déterminer le code magnétique qui est indiqué par le composant d'identification (210) de l'outil (107) qui est fixé au et/ou entraîné par le moteur (102) sur la base des informations de mesure.

10. Appareil (100) selon l'une quelconque des revendications précédentes, dans lequel l'unité de commande (101) est configurée pour :
- déterminer le code magnétique qui est indiqué par le composant d'identification (210) de l'outil (107) qui est fixé au et/ou entraîné par le moteur (102), et
- déterminer l'outil (107) parmi l'ensemble de K outils différents (107) au moyen d'une mise en correspondance prédéterminée entre l'ensemble des K codes magnétiques différents et l'ensemble des K outils différents (107).

11. Appareil (100) selon l'une quelconque des revendications précédentes, dans lequel :
- l'unité de commande (101) est configurée pour définir un ou plusieurs paramètres de fonctionnement du moteur (102) en fonction de l'outil (107) qui est fixé au et/ou entraîné par le moteur (102), et
- l'un ou plusieurs paramètres de fonctionnement comprennent :
- une vitesse et/ou une limitation de vitesse du moteur (102),
- une accélération et/ou une décélération de la vitesse du moteur (102),
- un couple et/ou une limitation de couple du moteur (102), et/ou
- une durée d'un fonctionnement du moteur (102).

12. Appareil (100) selon l'une quelconque des revendications précédentes, dans lequel l'unité de commande (101) est configurée pour :
- suivre, pour chaque outil (107) de l'ensemble des K outils différents (107), une durée d'utilisation cumulée de l'outil respectif (107), et
- faire fonctionner l'appareil (100) en fonction de la durée d'utilisation cumulée de l'outil (107) qui est fixé au et/ou entraîné par le moteur (102).

13. Procédé (300) de détection d'un outil (107) d'un appareil (100), dans lequel :
- l'appareil (100) comprend un moteur (102), configuré pour entraîner un outil (107) qui est fixé au moteur (102),
- le moteur (102) est configuré pour faire tourner l'outil (107) qui est fixé sur le moteur (102) autour d'un axe de rotation (201),
- l'appareil (100) comprend un réceptacle (104), configuré pour recevoir un contenu qui doit être traité dans le réceptacle (104) au moyen de l'outil (107) qui est fixé au et/ou entraîné par le moteur (102),
- l'appareil (100) est configuré de sorte que l'outil (107) qui est fixé au et/ou entraîné par le moteur (102) peut être sélectionné de façon interchangeable à partir d'un ensemble de K outils différents (107), où K ≥ 2,
- chaque outil (107) de l'ensemble de K différents outils (107) comprend un composant d'identification (210) qui est configuré pour générer un champ magnétique qui indique un code magnétique parmi un ensemble de K codes magnétiques différents pour les K outils différents respectifs (107),
- le composant d'identification (210) d'un outil (107) de l'ensemble des K différents outils (107) comprend M éléments magnétiques (211, 212, 213), où M >_ 2, à M emplacements différents dans le composant d'identification (210),
- chacun des M éléments magnétiques (211, 212, 213) est configuré pour générer une composante de champ magnétique du champ magnétique total qui est généré par le composant d'identification (210),
- au moins deux des M éléments magnétiques différents (211, 212, 213) sont situés à des distances radiales différentes de l'axe de rotation (201), et/ou au moins deux des M éléments magnétiques différents (211, 212, 213) sont situés côte à côte le long de l'axe de rotation (201), et
le procédé (300) comprend :
- la détermination (301) d'informations de mesure concernant le champ magnétique qui est généré par le composant d'identification (210) de l'outil (107) qui est fixé au et/ou entraîné par le moteur (102), et
- la détermination (302), sur la base des informations de mesure, si oui ou non un outil (107) et/ou quel outil (107) parmi l'ensemble de K différents outils (107) est fixé au et/ou entraîné par le moteur (102), et/ou le fonctionnement de l'appareil (100) en fonction des informations de mesure, en particulier en fonction du fait ou non qu'un outil (107) et/ou en fonction de quel outil (107) de l'ensemble de K différents outils (107) est fixé au et/ou entraîné par le moteur (102).
